# EUROPÄISCHE PATENTSCHRIFT

(11) **EP 4 390 585 B1**
(45) Veröffentlichungstag und Bekanntmachung des Hinweises auf die Patenterteilung: **13.08.2025**
(21) Anmeldenummer: 23207108.4
(22) Anmeldetag: 31.10.2023
(51) Int. Cl.: G05B 19/4062

(54) **SENSORSYSTEM**
SENSOR SYSTEM
SYSTÈME DE CAPTEUR

(30) Priorität: 16.11.2022 DE 102022130278
(43) Veröffentlichungstag der Anmeldung: 26.06.2024
(73) Patentinhaber: SICK AG, 79183 Waldkirch (DE)
(72) Erfinder: HOPP, David, 78166 Donaueschingen (DE); HOGG, Stefan, 78667 Villingendorf (DE)
(74) Vertreter: Manitz Finsterwald Patent- und Rechtsanwaltspartnerschaft mbB

(56) Entgegenhaltungen:
- EP-B1- 1 731 097
- DE-A1- 102012 209 540
- KROT PAVLO ET AL: "The identification of operational cycles in the monitoring systems of underground vehicles", MEASUREMENT, INSTITUTE OF MEASUREMENT AND CONTROL. LONDON, GB, vol. 151, 3 October 2019 (2019-10-03), XP085934627, ISSN: 0263-2241, [retrieved on 20191003], DOI: 10.1016/J.MEASUREMENT.2019.107111
- MANFRED WECK ET AL: "Prozessüberwachung, Prozessregelung, Diagnose und Instandhaltungsmaßnahmen", 30 November 2005, WERKZEUGMASCHINEN 3 MECHATRONISCHE SYSTEME, VORSCHUBANTRIEBE, PROZESSDIAGNOSE, SPRINGER VIEWEG, BERLIN HEIDELBERG, PAGE(S) 267 - 404, ISBN: 978-3-642-38746-3, XP009540510

## Beschreibung

Die Erfindung betrifft ein Sensorsystem zur Überwachung eines Motors, der über eine rotierende Motorwelle eine Maschinenanordnung antreibt, wobei durch ein periodisches Bewegungsmuster der Maschinenanordnung und/oder der Motorwelle ein Maschinenzyklus gegeben ist und das Sensorsystem folgendes umfasst: wenigstens einen Beschleunigungssensor zum kontinuierlichen oder intermittierenden Erfassen einer Beschleunigung des Motors, und
eine elektronische Steuereinheit, die mit dem wenigstens einen Beschleunigungssensor in Signalverbindung steht und dazu ausgebildet ist, für eine Verschleißerkennung einen Vergleich der erfassten Beschleunigung mit wenigstens einem vorgegebenen Schwellenwert durchzuführen und den Maschinenzyklus bei dem Vergleich zu berücksichtigen.

Die Überwachung von Motoren ist in vielen Bereichen der Technik bedeutsam. Beispielsweise gibt es in der Automatisierungstechnik Anwendungen mit mehreren oder sogar einer Vielzahl von Motoren, die möglichst nicht ausfallen sollen. Eine Verschleißerkennung ermöglicht eine Ausfallprognose, so dass rechtzeitig eine Reparatur oder ein Ersatz stattfinden kann. Durch eine derartige vorausschauende Wartung (predictive maintenance) wird die Verfügbarkeit der Maschinenanordnung verbessert. Hohe Beschleunigungen, wie sie beispielsweise bei Schwingungen und Stößen auftreten, sind häufig Anzeichen für vorliegenden Verschleiß, so dass mittels eines Beschleunigungssensors im Allgemeinen eine zuverlässige Verschleißerkennung möglich ist.

Der anwendungsabhängige Maschinenzyklus führt zu unterschiedlichen Beschleunigungswerten im Verlauf der Zeit. Ohne Berücksichtigung des Maschinenzyklus ist der Vergleich der erfassten Beschleunigung mit dem Schwellenwert nur begrenzt aussagekräftig, da das Ergebnis des Vergleichs vom Erfassungszeitpunkt innerhalb des Maschinenzyklus abhängig ist. Eine Berücksichtigung des Maschinenzyklus bei dem Vergleich kann dadurch erfolgen, dass der Schwellenwert in eine Beziehung zum Maschinenzyklus gesetzt wird, also zum Beispiel jeweils der am Anfang oder in der Mitte des Maschinenzyklus erfasste Beschleunigungswert mit dem Schwellenwert verglichen wird. Eine Berücksichtigung des Maschinenzyklus beim Vergleich zwischen erfasster Beschleunigung und Schwellenwert kann auch dadurch erfolgen, dass der Schwellenwert in Abhängigkeit von einer Position der aktuellen Beschleunigung innerhalb des Maschinenzyklus ausgewählt wird und/oder dadurch, dass bei einer Schwingungsfrequenzanalyse die Frequenz des Maschinenzyklus ausgeblendet wird.

Der Maschinenzyklus kann beispielsweise durch die programmierte Maschinensteuerung vorgegeben sein und dieser bei Inbetriebnahme der Anlage entnommen werden. Alternativ kann der Maschinenzyklus mittels eines "teaching"-Verfahrens eingelernt werden. Beides ist jedoch für den Betreiber der Maschinenanordnung mit einem beträchtlichen Aufwand verbunden, der zudem bei einer Änderung des Maschinenzyklus erneut anfällt.

Der Aufsatz von KROT PAVLO ET AL.: "The identification of operational cycles in the monitoring systems of underground vehicles", MEASUREMENT, INSTITUTE OF MEASUREMENT AND CONTROL, LONDON, GB, Bd. 151, 3. Oktober 2019, XP085934627, ISSN: 0263-2241, DOI: 1016/J.MEASUREMENT.2019.107111, offenbart ein Verfahren zum Zählen der Ladezyklen von Bergbaufahrzeugen anhand von Sensoreingaben.

Die EP 1 731 097 B1 offenbart ein Verfahren zur Aktivitätserkennung einer Person, die einen Sensor am Körper trägt.

Es ist eine Aufgabe der Erfindung, einen vereinfachten Einsatz von verschleißerkennenden Sensorsystemen zu ermöglichen, ohne die Zuverlässigkeit der Verschleißerkennung zu beeinträchtigen.

Erfindungsgemäß ist die elektronische Steuereinheit dazu ausgebildet, den Maschinenzyklus anhand eines periodisch auftretenden Musters im zeitlichen Verlauf der erfassten Beschleunigung des Motors automatisch zu erkennen.

Der Maschinenzyklus muss also für die Auswertung der Sensorinformationen nicht vorgegeben oder programmiert werden. Es ist kein Zutun des Bedieners erforderlich, so dass die Inbetriebnahme der Maschinenanordnung - selbst bei einem Wechsel der Konfiguration - besonders schnell erfolgen kann. Zudem werden Eingabe- oder Einlern-Fehler vermieden. Die Erkennung des Maschinenzyklus auf Grundlage der - ohnehin zu messenden - Beschleunigungswerte ist einfach und kostengünstig. Der automatisch erkannte Maschinenzyklus kann außerdem für eine erweiterte Verschleißerkennung herangezogen werden. Zum Beispiel kann eine Vielzahl von erfassten Beschleunigungswerten mit individuellen Schwellenwerten verglichen werden, die jeweils in Abhängigkeit von der Position des Beschleunigungswerts innerhalb des automatisch erkannten Maschinenzyklus vorgegeben sind.

Bei der durch den Beschleunigungssensor zu erfassenden Beschleunigung kann es sich je nach Ausgestaltung und Anbringung um eine bezüglich der Motorwelle axiale, radiale oder rotative Beschleunigung handeln. In Abhängigkeit von der Anwendung kann bei dem Vergleich der erfassten Beschleunigung mit dem Schwellenwert geprüft werden, ob die Beschleunigung - z. B. infolge von Schwingungen - einen Schwellenwert überschreitet, ob die Beschleunigung - z. B. infolge von verstärkter Reibung - einen Schwellenwert unterschreitet oder ob durch Stöße oder Reibung ein negativer Beschleunigungswert einen Schwellenwert unterschreitet. Gemeint ist also für diesen Text allgemein, dass der Beschleunigungswert gegen einen entsprechend ausgewählten Schwellenwert abgeprüft wird.

Die Informationsdichte kann über die Abtastrate des Beschleunigungssensors auf einen gewünschten Wert eingestellt werden.

Der Beschleunigungssensor kann als Dehnungsmess-Streifen, als mikro-elektromechanisches System (MEMS) oder als Gyroskop ausgeführt sein. Ferner kann der Beschleunigungssensor je nach Anwendung für eine einachsige oder mehrachsige Erfassung ausgelegt sein.

Erfindungsgemäß umfasst das Sensorsystem einen Drehgeber zum kontinuierlichen oder intermittierenden Erfassen der Winkelstellung der Motorwelle. Solche Drehgeber werden häufig für Motor-Feedback-Systeme verwendet.

Der wenigstens eine Beschleunigungssensor ist gemäß einem Aspekt der Erfindung an einem Bauteil des Drehgebers befestigt. Verschleißbedingte Bewegungen werden von der Maschinenanordnung und/oder dem Motor auf den Drehgeber übertragen, so dass sie von dem am oder im Drehgeber verbauten Beschleunigungssensor detektiert werden können. Beispielsweise kann der wenigstens eine Beschleunigungssensor in einem Gehäuse des Drehgebers, beispielsweise an einer ohnehin vorgesehenen Leiterplatte des Drehgebers, angebracht sein, was im Hinblick auf den verfügbaren Bauraum besonders günstig ist.

Ein anderer Aspekt der Erfindung sieht vor, dass der wenigstens eine Beschleunigungssensor und die elektronische Steuereinheit in den Drehgeber integriert sind. Dies verleiht dem Drehgeber die Möglichkeit, zusätzlich zu Informationen hinsichtlich des regulären Motorbetriebs wie z. B. der Drehzahl auch den Maschinenzyklus zu erkennen und gegebenenfalls den Maschinenzyklus betreffende Informationen auszugeben. Der Drehgeber ist demgemäß mit einer erweiterten Funktionalität versehen.

Grundsätzlich könnte der wenigstens eine Beschleunigungssensor auch zur Befestigung an einem Bauteil des Motors ausgebildet sein, beispielsweise am Stator oder am Gehäuse um zum Beispiel deren Vibrationen zu registrieren.

Die elektronische Steuereinheit kann dazu ausgebildet sein, zur automatischen Erkennung des Maschinenzyklus eine Autokorrelation des zeitlichen Verlaufs der erfassten Beschleunigung durchzuführen. Mittels eines Autokorrelations-Algorithmus kann die Selbstähnlichkeit der Beschleunigungswerte im zeitlichen Verlauf erkannt werden. Dies ermöglicht die Identifizierung von regelmäßig wiederkehrenden Ereignissen, wie sie dem Maschinenzyklus zugrunde liegen. Autokorrelations-Algorithmen sind relativ einfach zu implementieren.

Gemäß einer weiteren Ausführungsform der Erfindung ist die elektronische Steuereinheit dazu ausgebildet, den Maschinenzyklus nach seiner automatischen Erkennung in einem Speicher abzulegen, damit er einer weiteren Analyse zugänglich ist.

Die elektronische Steuereinheit kann dazu ausgebildet sein, ein Wartungs- und/oder Warnsignal auszugeben, wenn die Beschleunigung den wenigstens einen Schwellenwert überschreitet (bzw. bei entsprechender Ausgestaltung wie oben beschrieben unterschreitet). Auf diese Weise ist es möglich, eine Wartung, eine Reparatur oder einen Baugruppen-Austausch vorzunehmen, bevor der Verschleiß ein kritisches Maß erreicht. Somit können unerwünschte Stillstandzeiten der Maschinenanordnung vermieden werden.

Eine weitere Ausführungsform der Erfindung sieht vor, dass die elektronische Steuereinheit dazu ausgebildet ist, den wenigstens einen Schwellenwert in Abhängigkeit von dem automatisch erkannten Maschinenzyklus festzulegen, insbesondere bei der Inbetriebnahme des Sensorsystems. Sollte zum Beispiel der Maschinenzyklus an einer bestimmten Stelle einen relativ hohen Ausschlag aufweisen, so wird vorzugsweise für diese Stelle auch ein vergleichsweise großer Schwellenwert festgelegt, weil es sonst auch ohne tatsächlichen Verschleiß zu einer Verschleißerkennung kommen könnte. Ebenso kann ein niedriger Schwellenwert festgelegt werden, wenn der Maschinenzyklus an der betreffenden Stelle nur einen geringen Ausschlag aufweist.

Die elektronische Steuereinheit kann dazu ausgebildet sein, das automatische Erkennen des Maschinenzyklus wiederholt oder kontinuierlich durchzuführen. Dadurch können Änderungen des Maschinenzyklus berücksichtigt werden.

Weiterhin kann die elektronische Steuereinheit dazu ausgebildet sein, Veränderungen des Maschinenzyklus im Verlauf der Zeit zu erkennen. Dies kann beispielsweise durch einen Vergleich des aktuell ermittelten Maschinenzyklus mit einem gespeicherten früheren Maschinenzyklus bewerkstelligt werden.

Gemäß einer weiteren Ausführungsform der Erfindung ist die elektronische Steuereinheit dazu ausgebildet, wenigstens eine den Maschinenzyklus betreffende Information wie zum Beispiel die Länge des Maschinenzyklus, die maximale Beschleunigung innerhalb des Maschinenzyklus und/oder die Anzahl der Extremwerte innerhalb des Maschinenzyklus zu ermitteln. Dadurch wird die Funktionalität des Sensorsystems erweitert. Die den Maschinenzyklus betreffenden Informationen können an eine der Maschinenanordnung zugeordnete Steuereinheit ausgegeben werden.

Die elektronische Steuereinheit kann dazu ausgebildet sein, die erfasste Beschleunigung des Motors einer jeweiligen gleichzeitig erfassten Winkelstellung der Motorwelle zuzuordnen. Der Verlauf der Beschleunigung in Abhängigkeit von der Winkelstellung der Motorwelle kann analysiert, gespeichert und gegebenenfalls an eine externe Steuerung ausgegeben werden.

Eine spezielle Ausgestaltung der Erfindung sieht vor, dass die elektronische Steuereinheit dazu ausgebildet ist, mehrere Schwellenwerte festzulegen, die jeweiligen Zeitpunkten innerhalb des automatisch erfassten Maschinenzyklus zugeordnet sind, und für jeden Schwellenwert einen separaten Vergleich durchzuführen. Dies ermöglicht eine komplexere und exaktere Verschleißerkennung. Die Verschleißerkennung kann grundsätzlich auch auf einem kontinuierlich über den Maschinenzyklus verlaufenden Schwellenwert beruhen.

Die Erfindung betrifft auch ein Verfahren zum Überwachen eines Motors, der über eine rotierende Motorwelle eine Maschinenanordnung antreibt, mittels eines wie vorstehend beschriebenen Sensorsystems, wobei durch ein periodisches Bewegungsmuster der Maschinenanordnung und der Motorwelle ein Maschinenzyklus gegeben ist und bei dem Verfahren
- mittels des wenigstens einen Beschleunigungssensors eine Beschleunigung des Motors kontinuierlich oder intermittierend erfasst wird, und
- mittels der elektronischen Steuereinheit, die mit dem wenigstens einen Beschleunigungssensor in Signalverbindung steht, für eine Verschleißerkennung ein Vergleich der erfassten Beschleunigung mit wenigstens einem vorgegebenen Schwellenwert durchgeführt wird und der Maschinenzyklus bei dem Vergleich berücksichtigt wird.

Zur Lösung der vorstehenden Aufgabe wird erfindungsgemäß der Maschinenzyklus anhand eines periodisch auftretenden Musters im zeitlichen Verlauf der erfassten Beschleunigung des Motors automatisch erkannt.

Bevorzugt wird bei einem erfindungsgemäßen Verfahren mittels des Drehgebers die Winkelposition der Motorwelle kontinuierlich oder intermittierend erfasst.

Das erfindungsgemäße Verfahren kann im Übrigen Schritte umfassen, die vorstehend in Verbindung mit einem erfindungsgemäßen Sensorsystem angegebenen Merkmalen entsprechen.

Weiterbildungen der Erfindung sind auch den abhängigen Ansprüchen, der nachfolgenden Beschreibung sowie den beigefügten Zeichnungen zu entnehmen.

Die Erfindung wird nachfolgend beispielhaft unter Bezugnahme auf die Zeichnungen beschrieben.
- Fig. 1: zeigt in schematischer Form eine Maschinenanordnung, einen Motor zum Antreiben der Maschinenanordnung und ein erfindungsgemäßes Sensorsystem zum Überwachen des Motors.
- Fig. 2: ist ein Diagramm, das eine Beschleunigung des in Fig. 1 gezeigten Motors in Abhängigkeit von der Zeit zeigt.

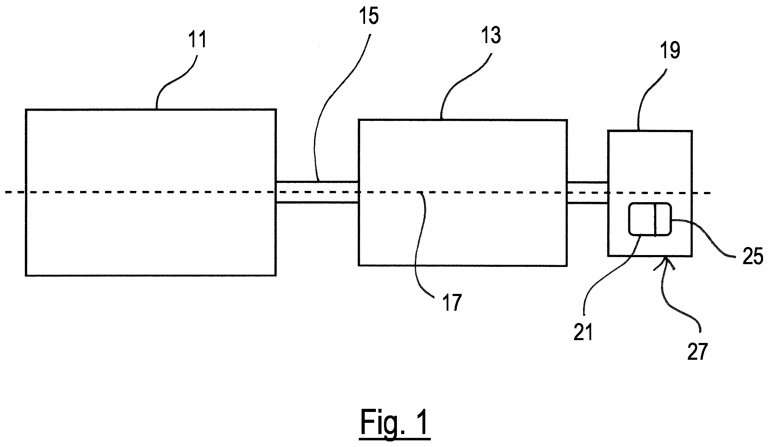

Die Fig. 1 zeigt eine Maschinenanordnung 11, bei der es sich beispielsweise um eine Produktförderanlage, eine Bearbeitungsmaschine oder eine automatische Handhabungsvorrichtung handeln kann, und einen Motor 13 zum Antreiben der Maschinenanordnung 11. Der Motor 13 ist zum Beispiel als Elektromotor, beispielsweise als Servomotor, ausgeführt. Weiterhin weist der Motor 13 eine Motorwelle 15 auf, die im Betrieb um eine Rotationsachse 17 rotiert. Die Motorwelle 15 ist mit einer nicht gezeigten Eingangswelle der Maschinenanordnung 11 antriebswirksam gekoppelt.

Ein Winkelmesssystem in Form eines mit der Motorwelle 15 gekoppelten Drehgebers 19 ist dazu vorgesehen, während des Betriebs des Motors 13 die Winkelstellung der Motorwelle 15 kontinuierlich oder intermittierend zu erfassen und gegebenenfalls darauf beruhend eine aktuelle Drehzahl des Motors 13 und/oder eine Anzahl bislang erfolgter Umdrehungen der Motorwelle 15 zu ermitteln. Der Drehgeber 19 kann als optischer oder magnetischer Inkrementalgeber ausgeführt sein, wie dies grundsätzlich bekannt ist. Ausführungen des Drehgebers mit anderen Wirkprinzipien, wie kapazitiv oder induktiv, sind ebenfalls möglich.

Ein Beschleunigungssensor 21 ist an dem Drehgeber 19 angeordnet und dient dazu, während des Betriebs des Motors 13 eine Beschleunigung des Motors 13 kontinuierlich oder intermittierend zu erfassen. Bevorzugt ist der Beschleunigungssensor 21 an einer Leiterplatte des Drehgebers 19 befestigt, was in Fig. 1 jedoch nicht sichtbar ist. Je nach Anwendung ist der Beschleunigungssensor 21 dafür ausgelegt und angeordnet, eine bezüglich der Rotationsachse 17 radiale, axiale (zum Beispiel bei Vibrationen) oder anderweitig gerichtete Beschleunigung zu erfassen. Der Beschleunigungssensor 21 kann auch mehrachsig sein.

Mit dem Beschleunigungssensor 21 steht eine elektronische Steuereinheit 25 in Verbindung, die vorzugsweise in einem Gehäuse 27 des Drehgebers 19 untergebracht ist. Alternativ kann die Steuereinheit 25 auch extern vom Drehgeber 19 vorgesehen sein.

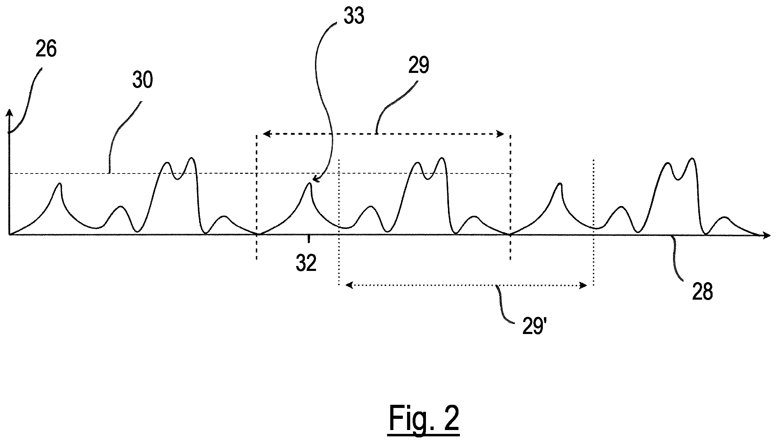

Fig. 2 zeigt einen beispielhaften Verlauf der von dem Beschleunigungssensor 21 erfassten Beschleunigung 26 in Abhängigkeit von der Zeit 28. In dem Verlauf ist ein periodisches Muster erkennbar. Dieses wird durch Bewegungsmuster der Maschinenanordnung 11 beziehungsweise der Motorwelle 15 hervorgerufen und allgemein als Maschinenzyklus 29 bezeichnet. Der Startzeitpunkt des Maschinenzyklus 29 ist im Prinzip willkürlich, was in Fig. 2 durch den zeitlich verschobenen Maschinenzyklus 29' verdeutlicht ist.

Die elektronische Steuereinheit 25 (Fig. 1) ist dazu ausgebildet, den Maschinenzyklus 29, 29' durch eine Analyse des zeitlichen Verlaufs der erfassten Beschleunigung 26 automatisch zu erkennen. Zu diesem Zweck wendet die elektronische Steuereinheit 25 zumindest bei der Inbetriebnahme der Maschinenanordnung 11 einen Autokorrelations-Algorithmus auf die erfassten Beschleunigungsdaten an. Der Maschinenzyklus 29, 29' einschließlich eines festgelegten Anfangspunkts wird in einem Speicher der elektronischen Steuereinheit 25 abgelegt.

Um einen Verschleiß des Motors 13, beispielsweise eine Abnutzung der Kugellager, rechtzeitig zu erkennen, führt die elektronische Steuereinheit 25 einen Vergleich der erfassten Beschleunigung 26 mit einem vorgegebenen Schwellenwert 30 durch. Der zuvor automatisch ermittelte Maschinenzyklus 29, 29' wird bei dem Vergleich dadurch berücksichtigt, dass einerseits der Beschleunigungswert zu einem bestimmten Zeitpunkt 32 innerhalb des Maschinenzyklus 29, 29' herangezogen wird und andererseits ein diesem Zeitpunkt 32 entsprechender Schwellenwert 30 festgelegt wird. Speziell wird ein Schwellenwert 30 festgelegt, der um eine Verschleißzugabe 33 über dem diesem Zeitpunkt 32 im Maschinenzyklus 29, 29' entsprechenden Wert liegt.

Wenn der Schwellenwert 30 von der aktuell erfassten Beschleunigung überschritten wird, gibt die elektronische Steuereinheit 25 ein Wartungs- und/oder Warnsignal aus. Der Bediener der Anlage kann dann für eine Reparatur oder einen Austausch des Motors 13 sorgen, bevor ein Ausfall desselben zu einem unerwünschten Anlagenstillstand führt.

Es versteht sich, dass auch mehrere Schwellenwerte 30 an unterschiedlichen zeitlichen Positionen des Maschinenzyklus 29, 29' überprüft werden können, um eine verfeinerte Verschleißerkennung bereitzustellen. Außerdem können auch unter Verwendung eines mehrachsigen Beschleunigungssensors 21 und/oder mehrerer Beschleunigungssensoren 21 mehrere Beschleunigungsrichtungen ausgewertet werden.

Zusätzlich zu dem Wartungs- und/oder Warnsignal kann die elektronische Steuereinheit 25 Informationen ausgeben, die den automatisch ermittelten Maschinenzyklus 29, 29' betreffen, wie zum Beispiel die Länge des Maschinenzyklus 29, 29' oder der Verteilung der Werte für die Beschleunigung 26 innerhalb des Maschinenzyklus 29, 29'.

Der Beschleunigungssensor 21 muss nicht zwingend am Drehgeber 19 angebracht sein, sondern könnte auch am Stator des Motors 13 angebracht sein. Alternativ zu einem linearen Beschleunigungssensor 21 könnte auch ein Gyroskop zur Erfassung der rotativen Beschleunigung der Motorwelle 15 und/oder des Stators vorgesehen sein.

Die Erfindung ermöglicht eine zuverlässige Verschleißerkennung von Motoren 13 unter Berücksichtigung des Maschinenzyklus 29, 29', ohne dass ein aktives Zutun des Bedieners erforderlich ist.

### Bezugszeichenliste:

- 11: Maschinenanordnung
- 13: Motor
- 15: Motorwelle
- 17: Rotationsachse
- 19: Drehgeber
- 21: Beschleunigungssensor
- 25: elektronische Steuereinheit
- 26: Beschleunigung
- 27: Gehäuse
- 28: Zeit
- 29, 29': Maschinenzyklus
- 30: Schwellenwert
- 32: Zeitpunkt
- 33: Verschleißzugabe

## Patentansprüche

1. Sensorsystem zur Überwachung eines Motors (13), der über eine rotierende Motorwelle (15) eine Maschinenanordnung (11) antreibt, wobei durch ein periodisches Bewegungsmuster der Maschinenanordnung (11) und/oder der Motorwelle (15) ein Maschinenzyklus (29, 29') gegeben ist und das Sensorsystem folgendes umfasst:
wenigstens einen Beschleunigungssensor (21) zum kontinuierlichen oder intermittierenden Erfassen einer Beschleunigung (26) des Motors (13), und eine elektronische Steuereinheit (25), die mit dem wenigstens einen Beschleunigungssensor (21) in Signalverbindung steht und dazu ausgebildet ist, für eine Verschleißerkennung einen Vergleich der erfassten Beschleunigung (26) mit wenigstens einem vorgegebenen Schwellenwert (30) durchzuführen und den Maschinenzyklus (29, 29') bei dem Vergleich zu berücksichtigen,
**dadurch gekennzeichnet, dass**
die elektronische Steuereinheit (25) dazu ausgebildet ist, den Maschinenzyklus (29, 29') anhand eines periodisch auftretenden Musters im zeitlichen Verlauf der erfassten Beschleunigung (26) des Motors (13) automatisch zu erkennen,
wobei das Sensorsystem einen Drehgeber (19) zum kontinuierlichen oder intermittierenden Erfassen der Winkelstellung der Motorwelle (15) umfasst, wobei der wenigstens eine Beschleunigungssensor (21) an einem Bauteil des Drehgebers (19) befestigt ist und/oder wobei der wenigstens eine Beschleunigungssensor (21) und die elektronische Steuereinheit (25) in den Drehgeber (19) integriert sind.

2. Sensorsystem nach Anspruch 1,
**dadurch gekennzeichnet,**
**dass** die elektronische Steuereinheit (25) dazu ausgebildet ist, zur automatischen Erkennung des Maschinenzyklus (29, 29') eine Autokorrelation des zeitlichen Verlaufs der erfassten Beschleunigung (26) durchzuführen.

3. Sensorsystem nach einem der vorstehenden Ansprüche,
**dadurch gekennzeichnet,**
**dass** die elektronische Steuereinheit (25) dazu ausgebildet ist, den Maschinenzyklus (29, 29') nach der automatischen Erkennung in einem Speicher abzulegen.

4. Sensorsystem nach einem der vorstehenden Ansprüche,
**dadurch gekennzeichnet,**
**dass** die elektronische Steuereinheit (25) dazu ausgebildet ist, ein Wartungs- und/oder Warnsignal auszugeben, wenn die Beschleunigung (26) den wenigstens einen Schwellenwert (30) überschreitet.

5. Sensorsystem nach einem der vorstehenden Ansprüche,
**dadurch gekennzeichnet,**
**dass** die elektronische Steuereinheit (25) dazu ausgebildet ist den wenigstens einen Schwellenwert (30) in Abhängigkeit von dem automatisch erkannten Maschinenzyklus (29, 29') festzulegen, insbesondere bei der Inbetriebnahme des Sensorsystems.

6. Sensorsystem nach einem der vorstehenden Ansprüche,
**dadurch gekennzeichnet,**
**dass** die elektronische Steuereinheit (25) dazu ausgebildet ist, das automatische Erkennen des Maschinenzyklus (29, 29') wiederholt oder kontinuierlich durchzuführen.

7. Sensorsystem nach einem der vorstehenden Ansprüche,
**dadurch gekennzeichnet,**
**dass** die elektronische Steuereinheit (25) dazu ausgebildet ist, Veränderungen des Maschinenzyklus (29, 29') im Verlauf der Zeit (28) zu erkennen.

8. Sensorsystem nach einem der vorstehenden Ansprüche,
**dadurch gekennzeichnet,**
**dass** die elektronische Steuereinheit (25) dazu ausgebildet ist, wenigstens eine den Maschinenzyklus (29, 29') betreffende Information wie zum Beispiel die Länge des Maschinenzyklus (29, 29'), die maximale Beschleunigung (26) innerhalb des Maschinenzyklus (29, 29') und/oder die Anzahl der Extremwerte innerhalb des Maschinenzyklus (29, 29') zu ermitteln.

9. Sensorsystem nach einem der vorstehenden Ansprüche,
**dadurch gekennzeichnet,**
**dass** die elektronische Steuereinheit (25) dazu ausgebildet ist, die erfasste Beschleunigung (26) des Motors (13) einer jeweiligen gleichzeitig erfassten Winkelstellung der Motorwelle (15) zuzuordnen.

10. Sensorsystem nach einem der vorstehenden Ansprüche,
**dadurch gekennzeichnet,**
**dass** die elektronische Steuereinheit (25) dazu ausgebildet ist, mehrere Schwellenwerte (30) festzulegen, die jeweiligen Zeitpunkten (32) innerhalb des automatisch erfassten Maschinenzyklus (29, 29') zugeordnet sind, und für jeden Schwellenwert (30) einen separaten Vergleich durchzuführen.

11. Verfahren zum Überwachen eines Motors (13), der über eine rotierende Motorwelle (15) eine Maschinenanordnung (11) antreibt, mittels eines Sensorsystems nach einem der vorstehenden Ansprüche, wobei durch ein periodisches Bewegungsmuster der Maschinenanordnung (11) und/oder der Motorwelle (15) ein Maschinenzyklus (29, 29') gegeben ist und bei dem Verfahren
- mittels des wenigstens einen Beschleunigungssensors (21) eine Beschleunigung (26) des Motors (13) kontinuierlich oder intermittierend erfasst wird, und
- mittels der elektronischen Steuereinheit (25), die mit dem wenigstens einen Beschleunigungssensor (21) in Signalverbindung steht, für eine Verschleißerkennung ein Vergleich der erfassten Beschleunigung (26) mit wenigstens einem vorgegebenen Schwellenwert (30) durchgeführt wird und der Maschinenzyklus (29, 29') bei dem Vergleich berücksichtigt wird, wobei der Maschinenzyklus (29, 29') anhand eines periodisch auftretenden Musters im zeitlichen Verlauf der erfassten Beschleunigung (26) des Motors (13) automatisch erkannt wird.

12. Verfahren nach Anspruch 11,
**dadurch gekennzeichnet,**
**dass** mittels des Drehgebers (19) die Winkelposition der Motorwelle (15) kontinuierlich oder intermittierend erfasst wird.

## Claims

1. A sensor system for monitoring a motor (13) which drives a machine arrangement (11) via a rotating motor shaft (15), wherein a machine cycle (29, 29') is given by a periodic movement pattern of the machine arrangement (11) and/or of the motor shaft (15) and the sensor system comprises the following:
at least one acceleration sensor (21) for continuously or intermittently detecting an acceleration (26) of the motor (13); and
an electronic control unit (25) which is in signal connection with the at least one acceleration sensor (21) and which is configured, for a wear recognition, to carry out a comparison of the detected acceleration (26) with at least one predefined threshold value (30) and to consider the machine cycle (29, 29') in the comparison,
**characterized in that**
the electronic control unit (25) is configured to automatically recognize the machine cycle (29, 29') based on a periodically occurring pattern in the time development of the detected acceleration (26) of the motor (13),
wherein the sensor system comprises a rotary encoder (19) for continuously or intermittently detecting the angular position of the motor shaft (15),
wherein the at least one acceleration sensor (21) is fastened to a component of the rotary encoder (19), and/or wherein the at least one acceleration sensor (21) and the electronic control unit (25) are integrated in the rotary encoder (19).

2. A sensor system according to claim 1,
**characterized in that**
the electronic control unit (25) is configured to carry out an autocorrelation of the time development of the detected acceleration (26) for an automatic recognition of the machine cycle (29, 29').

3. A sensor system according to one of the preceding claims,
**characterized in that**
the electronic control unit (25) is configured to store the machine cycle (29, 29') in a memory after the automatic recognition.

4. A sensor system according to any one of the preceding claims,
**characterized in that**
the electronic control unit (25) is configured to output a maintenance and/or warning signal if the acceleration (26) exceeds the at least one threshold value (30).

5. A sensor system according to any one of the preceding claims,
**characterized in that**
the electronic control unit (25) is configured to define the at least one threshold value (30) in dependence on the automatically recognized machine cycle (29, 29'), in particular during the putting into operation of the sensor system.

6. A sensor system according to any one of the preceding claims,
**characterized in that**
the electronic control unit (25) is configured to carry out the automatic recognition of the machine cycle (29, 29') repeatedly or continuously.

7. A sensor system according to any one of the preceding claims,
**characterized in that**
the electronic control unit (25) is configured to recognize changes in the machine cycle (29, 29') over time (28).

8. A sensor system according to any one of the preceding claims,
**characterized in that**
the electronic control unit (25) is configured to determine at least one piece of information relating to the machine cycle (29, 29'), such as the length of the machine cycle (29, 29'), the maximum acceleration (26) within the machine cycle (29, 29') and/or the number of extreme values within the machine cycle (29, 29').

9. A sensor system according to any one of the preceding claims,
**characterized in that**
the electronic control unit (25) is configured to associate the detected acceleration (26) of the motor (13) with a respective simultaneously detected angular position of the motor shaft (15).

10. A sensor system according to any one of the preceding claims,
**characterized in that**
the electronic control unit (25) is configured to define a plurality of threshold values (30) which are associated with respective points in time (32) within the automatically detected machine cycle (29, 29'), and to carry out a separate comparison for each threshold value (30).

11. A method for monitoring a motor (13), which drives a machine arrangement (11) via a rotating motor shaft (15), by means of a sensor system according to any one of the preceding claims, wherein a machine cycle (29, 29') is given by a periodic movement pattern of the machine arrangement (11) and/or of the motor shaft (15) and, in the method,
- by means of the at least one acceleration sensor (21), an acceleration (26) of the motor (13) is continuously or intermittently detected, and
- by means of the electronic control unit (25), which is in signal connection with the at least one acceleration sensor (21), a comparison of the detected acceleration (26) with at least one predefined threshold value (30) is carried out for a wear recognition and the machine cycle (29, 29') is considered in the comparison,
wherein the machine cycle (29, 29') is automatically recognized based on a periodically occurring pattern in the time development of the detected acceleration (26) of the motor (13).

12. A method according to claim 11,
**characterized in that**
the angular position of the motor shaft (15) is continuously or intermittently detected by means of the rotary encoder (19).

## Revendications

1. Système de capteurs pour la surveillance d'un moteur (13) qui entraîne un ensemble de machine (11) par l'intermédiaire d'un arbre de moteur rotatif (15), un cycle de machine (29, 29') étant donné par un modèle de mouvement périodique de l'ensemble de machine (11) et/ou de l'arbre de moteur (15), et le système de capteurs comprenant ce qui suit :
au moins un capteur d'accélération (21) pour détecter en continu ou par intermittence une accélération (26) du moteur (13), et
une unité de commande électronique (25) qui est en liaison de signal avec ledit au moins un capteur d'accélération (21) et qui, en vue d'une détection d'usure, est conçue pour effectuer une comparaison de l'accélération (26) détectée avec au moins une valeur seuil (30) prédéfinie et pour tenir compte du cycle de machine (29, 29') lors de la comparaison,
**caractérisé en ce que**
l'unité de commande électronique (25) est conçue pour reconnaître automatiquement le cycle de machine (29, 29') à l'aide d'un modèle apparaissant périodiquement dans la courbe temporelle de l'accélération (26) détectée du moteur (13),
le système de capteurs comprenant un codeur rotatif (19) pour détecter en continu ou par intermittence la position angulaire de l'arbre de moteur (15), ledit au moins un capteur d'accélération (21) étant fixé à un composant du codeur rotatif (19), et/ou
ledit au moins un capteur d'accélération (21) et l'unité de commande électronique (25) étant intégrés dans le codeur rotatif (19).

2. Système de capteurs selon la revendication 1,
**caractérisé en ce que**
l'unité de commande électronique (25) est conçue pour effectuer une auto-corrélation de la courbe temporelle de l'accélération (26) détectée afin de reconnaître automatiquement le cycle de machine (29, 29').

3. Système de capteurs selon l'une des revendications précédentes,
**caractérisé en ce que**
l'unité de commande électronique (25) est conçue pour stocker le cycle de machine (29, 29') dans une mémoire après la reconnaissance automatique.

4. Système de capteurs selon l'une des revendications précédentes,
**caractérisé en ce que**
l'unité de commande électronique (25) est conçue pour émettre un signal de maintenance et/ou d'avertissement lorsque l'accélération (26) dépasse ladite au moins une valeur seuil (30).

5. Système de capteurs selon l'une des revendications précédentes,
**caractérisé en ce que**
l'unité de commande électronique (25) est conçue pour fixer ladite au moins une valeur seuil (30) en fonction du cycle de machine (29, 29') reconnu automatiquement, en particulier lors de la mise en service du système de capteurs.

6. Système de capteurs selon l'une des revendications précédentes,
**caractérisé en ce que**
l'unité de commande électronique (25) est conçue pour effectuer la reconnaissance automatique du cycle de machine (29, 29') de manière répétée ou continue.

7. Système de capteurs selon l'une des revendications précédentes,
**caractérisé en ce que**
l'unité de commande électronique (25) est conçue pour reconnaître des modifications du cycle de machine (29, 29') au cours du temps (28).

8. Système de capteurs selon l'une des revendications précédentes,
**caractérisé en ce que**
l'unité de commande électronique (25) est conçue pour déterminer au moins une information concernant le cycle de machine (29, 29'), comme par exemple la longueur du cycle de machine (29, 29'), l'accélération maximale (26) au sein du cycle de machine (29, 29') et/ou le nombre de valeurs extrêmes au sein du cycle de machine (29, 29').

9. Système de capteurs selon l'une des revendications précédentes,
**caractérisé en ce que**
l'unité de commande électronique (25) est conçue pour associer l'accélération (26) détectée du moteur (13) à une position angulaire respective de l'arbre de moteur (15) détectée simultanément.

10. Système de capteurs selon l'une des revendications précédentes,
**caractérisé en ce que**
l'unité de commande électronique (25) est conçue pour fixer plusieurs valeurs seuils (30) associées à des instants respectifs (32) au sein du cycle de machine (29, 29') détecté automatiquement, et pour effectuer une comparaison séparée pour chaque valeur seuil (30).

11. Procédé de surveillance d'un moteur (13), entraînant un ensemble de machine (11) par l'intermédiaire d'un arbre de moteur rotatif (15), au moyen d'un système de capteurs selon l'une des revendications précédentes, dans lequel un cycle de machine (29, 29') est donné par un modèle de mouvement périodique de l'ensemble de machine (11) et/ou de l'arbre de moteur (15), procédé dans lequel
- une accélération (26) du moteur (13) est détectée en continu ou par intermittence au moyen d'au moins un capteur d'accélération (21), et
- au moyen de l'unité de commande électronique (25) qui est en liaison de signal avec ledit au moins un capteur d'accélération (21), en vue d'une détection d'usure, une comparaison de l'accélération (26) détectée avec au moins une valeur seuil (30) prédéfinie est effectuée et le cycle de machine (29, 29') est pris en compte lors de la comparaison,
le cycle de machine (29, 29') est reconnu automatiquement à l'aide d'un modèle apparaissant périodiquement dans la courbe temporelle de l'accélération (26) détectée du moteur (13).

12. Procédé selon la revendication 11,
**caractérisé en ce que**
la position angulaire de l'arbre de moteur (15) est détectée en continu ou par intermittence au moyen du codeur rotatif (19).
